# FASCICULE DE BREVET EUROPEEN

(11) **EP 0 913 345 B1**
(45) Date de publication et mention de la délivrance du brevet: **23.07.2003**
(21) Numéro de dépôt: 98402721.9
(22) Date de dépôt: 30.10.1998
(51) Int. Cl.: B65G 15/10, B65G 47/26

(54) **Convoyeur accumulateur modulaire multivoies a courroies d'entrainement escamotables sous charge**
Modulartiger Mehrweg-Stauförderer mit unter Last versenkbaren Antriebsriemen
Modular multi-path accumulation conveyor with under load retractable drive belts

(30) Priorité: 31.10.1997 FR 9713719
(43) Date de publication de la demande: 06.05.1999
(73) Titulaire: ARIES PACKAGING S.A., 10430 Rosieres Pres Troyes (FR)
(72) Inventeur: Beaucote, Gerard, 10420 Les Noes Pres Troyes (FR); De Guglielmo, Pascal, 10300 Montgueux (FR)
(74) Mandataire: Derambure, Christian

(56) Documents cités:
- GB-A- 892 839
- GB-A- 2 220 903
- US-A- 3 047 127
- US-A- 3 187 878
- US-A- 3 791 510
- US-A- 4 318 468
- US-A- 4 410 081
- US-A- 5 085 311

## Description

L'invention se rapporte à un dispositif de convoyage ainsi qu'à un convoyeur à accumulation comportant un tel dispositif.

Les convoyeurs à accumulation connus dans l'état de la technique peuvent être classés selon trois grandes catégories.

Une première catégorie de convoyeurs à accumulation est celle des convoyeurs à accumulation flexible.

Cette première classe de convoyeurs est telle que le débit d'entrée et le débit de sortie sont indépendants l'un de l'autre.

Les transrouleurs à gravité, les convoyeurs à chaînes à rouleaux, les transporteurs à rouleaux commandés par courroies, les segments de transporteurs à rouleaux commandés par chaînes forment les exemples les plus courants pour cette première catégorie de convoyeurs à accumulation.

Une deuxième catégorie de convoyeurs à accumulation est celle des convoyeurs à accumulation à écoulement. Cette deuxième classe de convoyeurs est telle que des groupes de produits sont déplacés simultanément vers la sortie du convoyeur, ces groupes étant indexés.

Certains convoyeurs à bandes, certains transporteurs à rouleaux commandés par chaînes appartiennent à cette deuxième catégorie de convoyeurs à accumulation.

Une troisième catégorie de convoyeurs à accumulation comprend les convoyeurs va-et-vient, les convoyeurs à balancier oscillant par rapport à un axe, par exemple horizontal.

Dans ces convoyeurs, l'accumulation peut être considérée comme fixée, une charge entrant et une charge sortant du convoyeur à chaque mouvement de celui-ci.

Le choix d'un type de convoyeur à accumulation dépend de nombreux facteurs tels que la taille et le poids des articles à convoyer, les caractéristiques mécaniques de ces articles à convoyer et notamment leur éventuelle fragilité, les conditions d'environnement, l'encombrement admissible pour le convoyeur.

Les procédés de fabrication ou de conditionnement, impliquant le plus souvent des étapes de durées différentes, les convoyeurs à accumulation sont très usités en amont de postes de machines dans lesquelles les opérations les plus longues sont réalisées.

Des zones de stockage tampons sont par exemples présentes dans les machines de groupage, les machines de traitement thermique de denrées alimentaires ou non.

Les convoyeurs à chaînes sont ainsi pourvus fréquemment de tapis d'accumulation.

Des systèmes de stockage fixes, en ligne, de type premier entré - dernier sorti, des systèmes de stockage flexibles à entrée et sortie indépendantes de type premier entré - dernier sorti, peuvent ainsi être rencontrés dans les industries alimentaires, chimiques ou pharmaceutiques,

Le document EP 291 105 décrit un convoyeur à rouleaux à accumulation comprenant un disque de friction débrayable.

Le document EP 420 907 décrit un transporteur à courroies comprenant une courroie sans fin pourvu de deux éléments d'absorption des forces qui s'étendent sur toute la longueur de la courroie et donc chacun est relié à une partie de bord respectif de la courroie et fait saillie sur le même côté de la courroie lorsque celle-ci est dans un état redressé.

Le document EP 326 660 décrit un convoyeur à rouleaux d'accumulation avec entraînement par rouleaux intermédiaires.

Le transporteur décrit dans le document EP 326 660 est conçu pour le stockage et le transport de colis, sans pression d'accumulation, les rouleaux intermédiaires pouvant être débrayés d'une position d'engagement à une position de repos.

Le document EP 363 287 décrit une ligne de production à stock tampon dynamique. Cette ligne de production comprend deux convoyeurs reliant chacun deux machines successives et permettant une accumulation des pièces issues de la premières machine, ce stock tampon permettant de pallier les différences temporaires de débit de production des deux machines. Un détecteur d'accumulation disposé à la sortie de la première machine permet l'arrêt de cette dernière et du convoyeur en cas d'accumulation excessive des pièces sur le convoyeur, ce convoyeur comprenant un tronçon amont pouvant fonctionner sélectivement à grande vitesse V₁ ou petite vitesse V₂ et un tronçon aval pourvu d'un second détecteur d'accumulation.

Lors d'une accumulation de pièces jusqu'au niveau du second détecteur, le tronçon amont passe du fonctionnement à grande vitesse V₁ au fonctionnement à petite vitesse V₂.

Le document EP 245 806 décrit un transporteur à accumulateur pour une machine de traitement de bouteilles comprenant un tapis à vitesse régulée par des signaux sonores.

D'autres types de convoyeurs à accumulation sont décrits dans les documents EP 178 636, EP 85 886, EP 95 858, EP 256 926, par exemple. Un conveyeur selon le préambule de la revendication 1 est connu du document GB 892 839.

Les convoyeurs à accumulation connus dans l'art antérieur présentent de nombreux inconvénients. Conventionnellement, ces convoyeurs fonctionnent sur un mode tout ou rien. Un capteur détecte l'accumulation excessive de produit par rapport à un seuil prédéterminé, ce qui entraîne la modification brutale de la vitesse de convoyage.

Lorsque les convoyeurs connus de l'art antérieur ne fonctionnent pas en tout ou rien, ce qui permet d'éviter les a-coups et les chocs entre les produits convoyés, des dispositifs compliqués, au réglage et à la maintenance délicats sont prévus.

L'invention a pour objet de fournir un dispositif de convoyage simple, à accumulation, ne présentant pas les inconvénients des dispositifs connus de l'art antérieur et permettant en particulier le convoyage et l'accumulation de produits et légers et/ou fragiles.

L'installation selon l'invention permet d'éviter notamment un déplacement des produits entraînant leur chevauchement, chevauchement qui serait néfaste voire incompatible avec la suite du procédé que doivent subir ces produits.

A cet égard, l'installation selon l'invention est particulièrement adaptée au convoyage de pots comprenant une face d'ouverture haute de surface supérieure à celle de leur base, comme par exemple des pots thermoformés pour produits laitiers.

A cette fin, l'invention se rapporte, selon un premier aspect, à un dispositif de convoyage à courroie comprenant deux organes de renvoi d'au moins une courroie sans fin, l'un au moins des deux organes de renvoi étant entraîné en rotation de sorte à provoquer le déplacement de la dite courroie qui est montée en tension entre les organes de renvoi, ce dispositif comprenant un support pourvu d'une gorge, caractérisé en ce que ledit support comprend au moins une zone d'appui de la surface inférieure de la courroie, cette zone d'appui étant distante d'une hauteur du fond de la gorge, la courroie pouvant s'escamoter dans la gorge sous l'effet d'une charge importante de convoyage.

La courroie peut être élaborée en un matériau choisi parmi le groupe comprenant les polymères tels que PVC, PP, PTFE, PA, élastomères, les polymères renforcés de fibres naturelles, minérales ou synthétiques, les élastomères chargés de fibres métalliques.

La courroie peut être de section transversale ronde, son axe d'élancement étant en outre disposé au droit des zones d'appui à une distance en dessous de la surface supérieure du support, son diamètre étant inférieur à l'ouverture latérale de la gorge.

Le support peut être élaboré en un matériau choisi parmi le groupe comprenant les polymères tels que PVC, PP, PTFE, PA ; les élastomères, les alliages métalliques.

Dans un mode de réalisation, le support est réalisé en polyamide haute densité ou tout autre polymère équivalent résistant à l'usure par frottement, facilement usinable et présentant une absorption d'humidité faible et de faibles coefficients de dilatation en atmosphère humide.

Le support peut comporter deux gorges, dans chacune desquelles se déplace une courroie.

Les deux gorges peuvent être de formes sensiblement identiques, les courroies étant de géométries sensiblement identiques.

Les deux gorges peuvent être de formes différentes, en section transversale, les courroies étant de formes différentes en section transversale.

Les deux gorges peuvent être disposées symétriquement par rapport à un plan longitudinal de symétrie du support.

L'invention se rapporte, selon un deuxième aspect, à un convoyeur modulaire d'accumulation, multivoies, comprenant au moins deux desdits dispositifs.

Chaque dispositif de convoyage formant un module du convoyeur comporte deux rouleaux dont l'un au moins est relié à un dispositif moteur pourvu d'un variateur de vitesse.

Les courroies d'un module donné sont décalées transversalement des courroies des voies de convoyage correspondantes, dans le module amont ou le module aval du module considéré.

Le décalage transversal entre les courroies des modules adjacents, pour chaque voie de convoyage, est sensiblement identique à la distance séparant le plan de symétrie L des supports et l'axe d'inertie des produits convoyés.

Ce convoyeur modulaire d'accumulation comporte des moyens de détection de la saturation d'une zone tampon d'accumulation de produits.

Les moyens de détection sont associés à des moyens de commande de la rotation d'au moins un organe de renvoi des courroies d'un convoyeur.

L'invention se rapporte, selon un troisième aspect, à l'application dudit convoyeur modulaire d'accumulation multivoies au convoyage de pots, de groupes de pots ou de nappes de pots, tels que des pots thermoformés pour produits laitiers par exemple.

D'autres objets et avantages de l'invention apparaîtront au cours de la description suivante de modes de réalisation, description qui va être faite en se référant aux dessins annexés dans lesquels :
- la figure 1 est une vue en perspective d'un support de cable d'un dispositif de convoyage selon l'invention ;
- la figure 2 est une vue d'un groupe de supports de cable tels que représentés en figure 1, ces supports étant destinés à être intégrés dans un dispositif de convoyage de pots ;

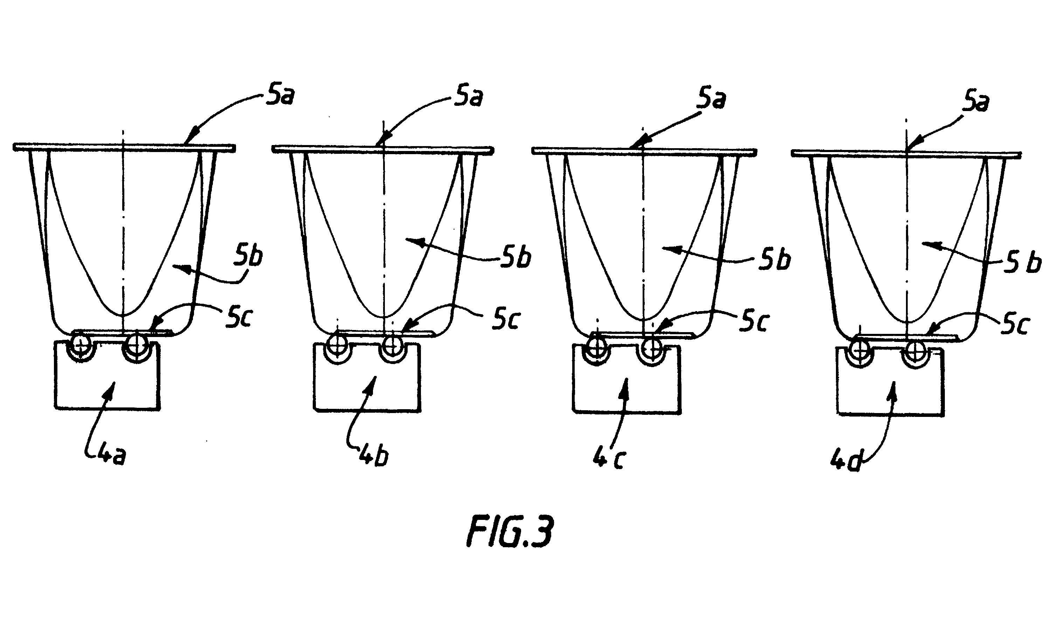

- la figure 3 est une vue en coupe selon le plan P de la figure 2 ;
- la figure 4 est une vue de détail de la figure 3 ;
- la figure 5 est une vue en perspective des moyens d'entraînement des sections successives d'un convoyeur d'accumulation modulaire selon l'invention ;
- la figure 6 est une vue de détail de la figure 5 ;
- la figure 7 est une vue latérale schématique du convoyeur représenté en figure 5 ;
- la figure 8 est une vue en élévation d'un rouleau d'entraînement des courroies d'un convoyeur d'accumulation modulaire tel que représenté en figure 5 ;
- la figure 9 est une vue de détail de la figure 8 ;
- les figure 10 et 11 sont des diagrammes schématiques correspondant à la cinématique des tronçons de convoyeur d'accumulation en situation de stockage, de convoyage libre, de destockage.

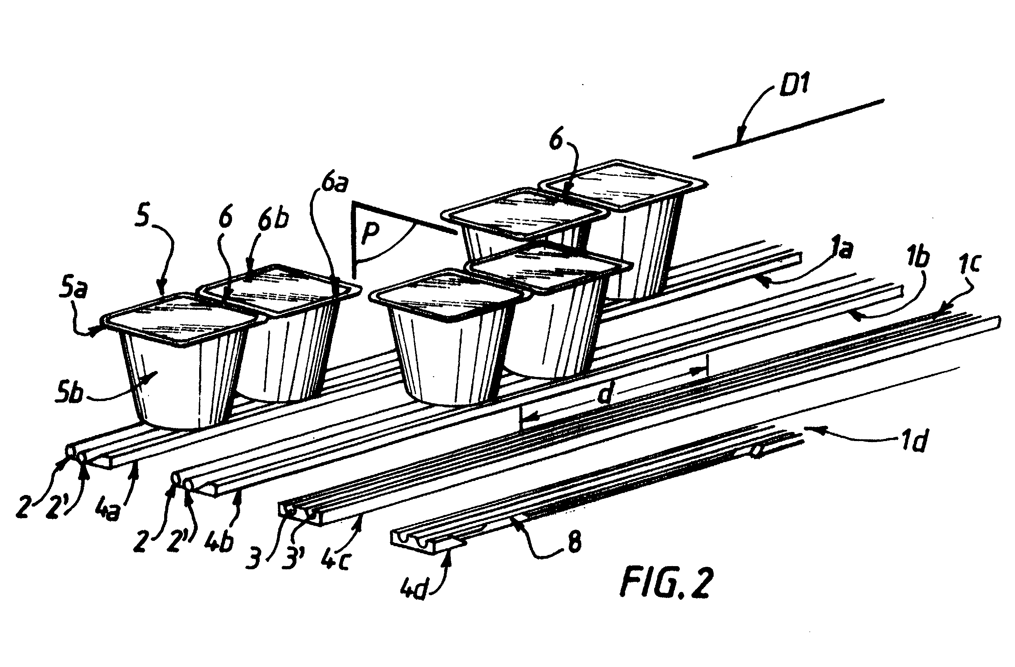

On se réfère tout d'abord à la figure 2.

L'invention se rapporte, selon un premier aspect, à une voie de convoyage 1 d'un dispositif d'accumulation.

Le dispositif représenté schématiquement en figure 2 comprend quatre voies de convoyage 1a, 1b, 1c, 1d.

Un dispositif de convoyage et d'accumulation selon l'invention peut toutefois comprendre plus de quatre ou moins de quatre voies de convoyage, disposées côte à côte et plus ou moins distantes les unes des autres.

Afin de clarté, les voies de convoyage 1c et 1d sont représentées en figure 2 sans les courroies 2, 2' placées dans les gorges 3, 3' de chaque support 4, le support 4 de la voie 1d étant représenté partiellement éclaté, de sorte à faire apparaître sa géométrie interne.

Des pots 5, par exemple thermoformés et en plastique, sont convoyés sur chaque voie la, 1b, 1c, 1d par friction sur les courroies 2, 2' mobiles dans les gorges 3, 3' des supports 4a, 4b, 4c, 4d.

Les pots 5 comportent une face supérieure sensiblement plane 5a et un corps 5b dont la base 5c, opposée à la face 5a est d'aire inférieure à celle de la surface supérieure 5a.

Dans une application particulière de l'invention, les pots 5 sont solidarisés entre eux par au moins un de leurs côtés 6, de sorte à former une bande ou une nappe de pots entraînée par le convoyeur.

Un dispositif de convoyage selon l'invention est ainsi adapté au convoyage de groupes de deux, quatre, six ou huit pots par exemple, en sens long ou sens travers.

Par "sens long" est désigné la possibilité de convoyer des groupes de pots, par exemple des paires de pots, dans une direction de convoyage D1 sensiblement parallèle à la plus grande dimension des groupes de pot (cf figure 2).

Par "sens travers" est désigné la possibilité de convoyer des groupes de pots, par exemple des paires de pots, dans une direction de convoyage D1 sensiblement perpendiculaire à la plus grande dimension des groupes de pots.

Dans une autre application possible de l'invention, les pots 5 sont individualisés.

Des barres de guidage peuvent être prévues au dessus et en regard des voies de convoyage 1a, 1b, 1c, 1d, ces barres de guidage étant associées par exemple aux bords saillants opposés 6a, 6b des paires de pots (cf figure 2).

Par "étant associés" l'on désigne le fait qu'en fonctionnement normal, les bords saillants opposés 6a, 6b des paires de pots (et d'une manière générale les objets convoyés) ne sont pas supportés par les barres de guidage.

En effet, ainsi qu'il sera décrit plus complètement par la suite, les objets convoyés sont supportés, en fonctionnement normal, par les courroies 2, 2'.

Chaque support 4a, 4b, 4c, 4d comporte deux gorges sensiblement identiques 3, 3'.

Dans le mode de réalisation représenté, ces gorges sont de forme générale semi-circulaires ouvertes vers le haut.

Dans d'autres modes de réalisation, non représentés, ces gorges 3, 3' sont de section différentes, et complémentaires de celles des courroies 2, 2', mobiles dans ces gorges 3, 3'.

Les courroies 2, 2' sont, dans le mode de réalisation représenté, de section circulaire.

Dans d'autres modes de réalisation, non représentés, ces courroies 2, 2' sont de sections carrées, rectangulaires, polygonales, elliptiques, leur face supérieure pouvant être plus large transversalement que leur face inférieure ou étant au contraire, plus étroite que leur face inférieure.

Chaque support 4a, 4b, 4c, 4d peut comporter une seule courroie 2 ou plus de deux courroies mobiles dans des gorges 3 de forme identique en section transversale ou non.

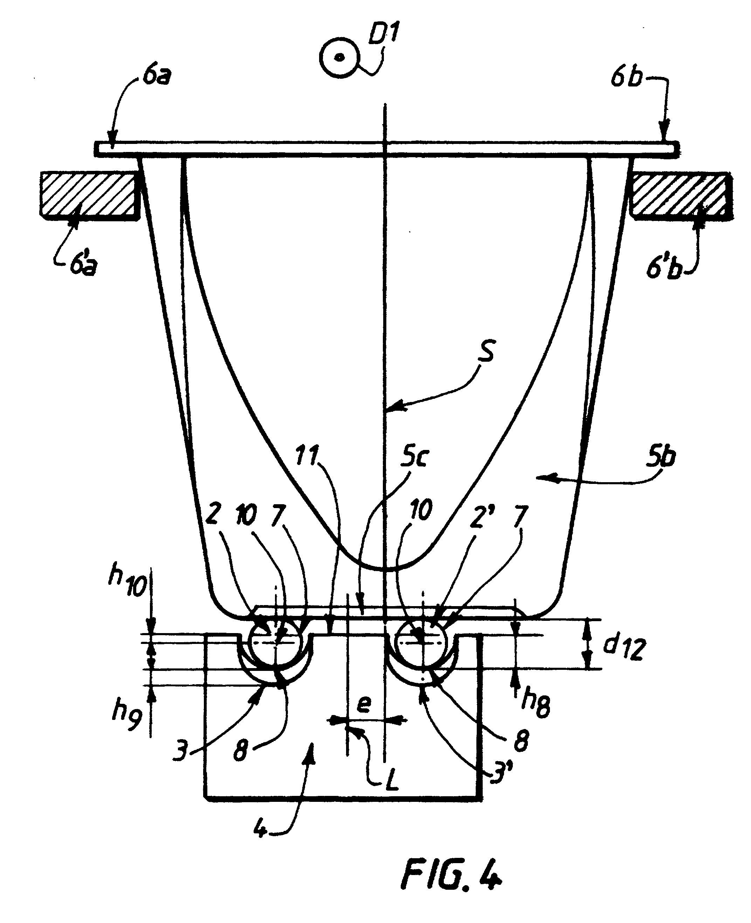

Dans le mode de réalisation représenté, chaque support 4 est symétrique par rapport à un plan longitudinal L (voir figure 4).

Chaque produit convoyé 5 comporte, dans le mode de réalisation représenté, un plan général de symétrie S.

Ainsi qu'il apparaît en figure 4, lorsque les produits 5 sont convoyés, le plan S de symétrie des produits 5 est décalé transversalement du plan de symétrie L des supports 4, d'une distance e.

Lorsque les courroies 2, 2' sont de section sensiblement circulaires, le contact entre la face supérieure 7 de ces courroies et la face inférieure 5c des produits 5 peut être établi sur une surface de petite dimension, l'étendue de cette surface de contact dépendant notamment du poids des produits convoyés, de la résistance mécanique du matériau constituant les courroies 2, 2' et des conditions de fonctionnement du convoyeur ainsi qu'il apparaîtra par la suite.

Chaque support 4 est pourvu d'au moins une zone d'appui 8 des courroies 2, 2'.

La face inférieure 9 des courroies 2, 2' est toujours sensiblement en contact avec ces zones d'appui écartées régulièrement les unes des autres d'une distance sensiblement constante d.

Les zones d'appui 8 d'une longueur 1 mesurée selon la direction longitudinale D1 forment des surfaces courbes ouvertes vers le haut, dont le fond est distant du fond des gorges 3, 3' d'une distance h₉ liée à la possibilité d'escamotage des courroies rondes 2, 2' dans les supports 4.

Les axes 10, 10' de symétrie des courroies 2, 2' sont disposés sensiblement selon la direction D₁ et sont écartés de la face supérieure 11 de chaque support 4 d'une hauteur h10 inférieure à la hauteur h9 définie ci-dessus.

Dans le mode de réalisation représenté, la hauteur h₉ est sensiblement identique au rayon des courroies 2, 2',

Le diamètre d12 des courroies 2, 2' est inférieur à l'ouverture transversale des gorges 3, 3', assurant ainsi un jeu fonctionnel.

La structure des supports 4 est donc telle que les courroies 2, 2' sont placées en appui sur les zones d'appui 8 et saillent par rapport à la face supérieure 11 des supports 4, au droit de ces zones d'appui 8.

Le diamètre d12 des courroies 2, 2' est en effet supérieur à la hauteur h₈ séparant le fond des zones d'appui 8 et la face supérieure 11 des supports 4.

La structure des supports 4 permet en revanche aux courroies 2, 2' de descendre vers le fond des gorges 3, 3', entre les zones d'appui 8. Ce mouvement de descente des courroies 2, 2' conduisant à leur effacement, leur escamotage, et à la perte éventuelle du contact de friction avec la base 5c des produits convoyés 5, est obtenu dès lors que la charge sur une courroie donnée dépasse une valeur seuil.

Lorsque les courroies descendent dans les gorges 3, 3', les bords 6a, 6b des produits convoyés peuvent le cas échéant reposer sur les barres de guidage 6'a, 6'b.

Lorsque les courroies descendent dans les gorges 3, 3', les produits convoyés 5 peuvent, en variante ou de plus reposer sur les supports 4, entre les zones d'appui 8.

Les courroies 2, 2' sont montées en tension.

Ces courroies peuvent être élaborées à partir d'un matériau choisi parmi le groupe comprenant les matières plastiques comprenant une ou plusieurs couches de textile intermédiaire faites de fils de chaîne en polyester et de fils de trame en polyamide, le polytétrafluroéthylène, les tissus de fibres naturelles, minérales ou synthétiques, particulièrement de verre ou analogues, imprégnés et/ou revêtus avec de la matière plastique telle que du polytétrafluoroéthylène ou analogue.

Les supports 4 sont réalisés en un matériau choisi parmi le groupe comprenant les aciers et alliages métalliques, les polymères.

Dans un mode de réalisation, les supports 4 sont réalisés en polyamide haute densité ou tout autre polymère résistant à l'usure par frottement, facilement usinable et présentant une absorption d'humidité faible et des faibles coefficients de dilatation en atmosphère humide.

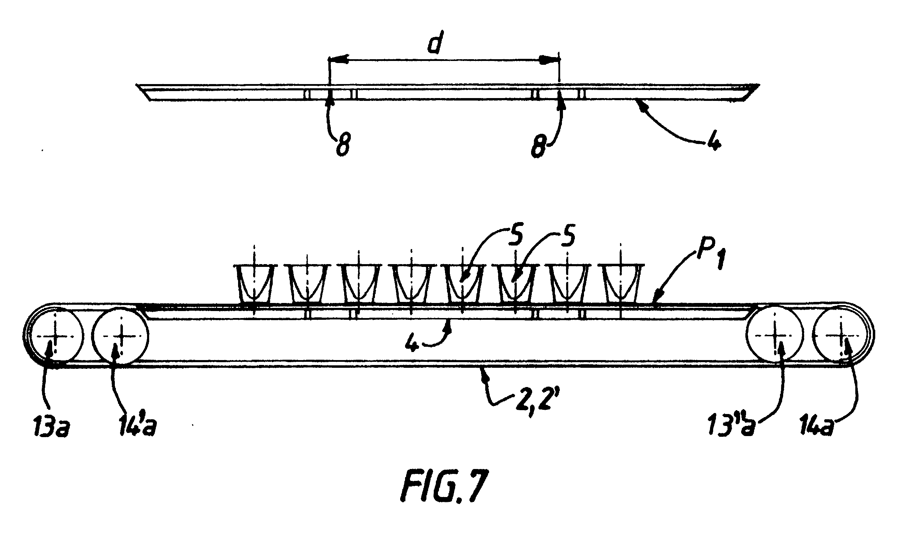

En phase de convoyage normal, hors accumulation de produits 5 sur les courroies 2, 2', la surface supérieure 7 des courroies 2, 2' est en contact avec la face inférieure 5c des produits convoyés 5, ce contact étant sensiblement disposé dans un premier plan P1 (voir figure 7).

Lorsqu'une quantité importante de produits 5 reste sur les courroies 2, 2', par suite d'un débit de sortie réduit ou nul du dispositif de convoyage, les courroies 2, 2' pénètrent dans les gorges 3, 3' et ne sont éventuellement plus en contact avec la surface inférieure des produits convoyés 5, sauf au droit des zones d'appui 8 des courroies 2, 2'.

Parallèlement, des capteurs détectent l'accumulation des produits sur le dispositif de convoyage multivoies et une réduction de la vitesse d'entraînement des courroies 2, 2' est commandée.

L'invention concerne, selon un deuxième aspect, un convoyeur modulaire d'accumulation comprenant au moins deux dispositifs tels qu'il vient d'être décrit disposés latéralement et sensiblement parallèlement ou disposés en amont l'un de l'autre.

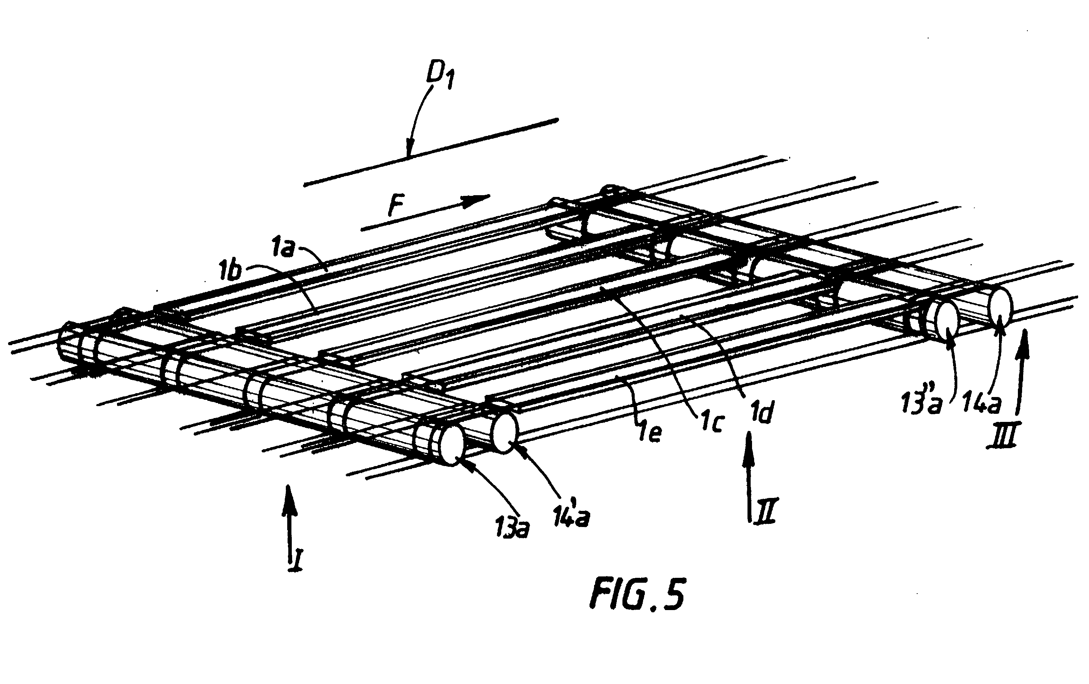

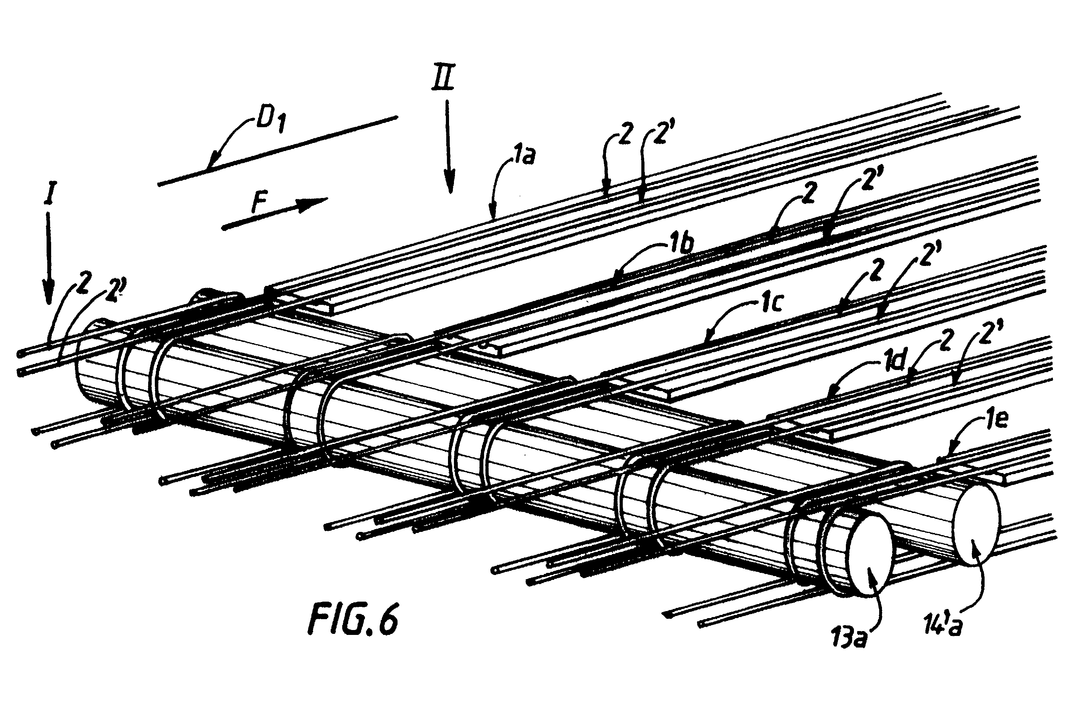

Les figures 5 et 6 illustrent l'association de dispositifs de convoyage tels que décrits auparavant, placés en aval les uns des autres selon une direction générale de convoyage D1.

Dans le mode de réalisation représenté, chaque dispositif comprend cinq voies de convoyage la, 1b, 1c, 1d et le sensiblement parallèles et distantes d'une longueur constante deux à deux.

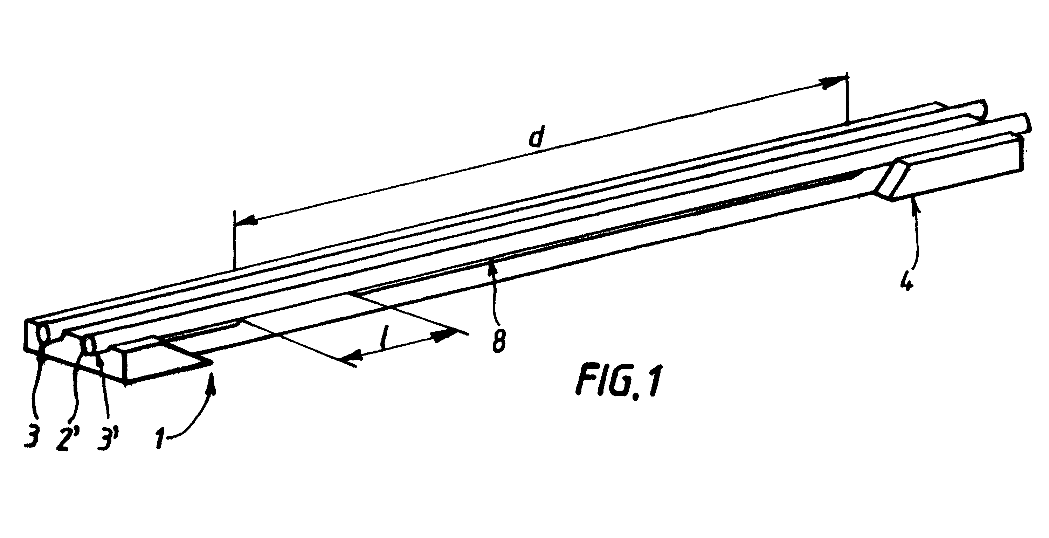

Ainsi qu'il a été dit plus haut, chaque dispositif peut comporter plus ou moins de cinq voies de guidage du type représenté en figure 1.

Chaque dispositif comporte deux rouleaux 13, 13' formant organes de renvoi des cables 2, 2' associés à chaque voie de convoyage.

L'un des deux rouleaux au moins est relié à un dispositif moteur pourvu d'un variateur de vitesse.

Ainsi que le montre la figure 5, en prenant pour sens de convoyage le sens de la flèche F, l'on rencontre :
- un rouleau 13a amont pour l'entraînement des cables d'un deuxième module II de convoyage
- un rouleau 14'a aval pour l'entraînement des cables d'un premier module I de convoyage, partiellement représenté
- un rouleau 13"a amont pour l'entraînement des cables d'un troisième module III de convoyage, partiellement représenté
- le second rouleau 14a, aval, pour l'entraînement des cables du deuxième module II.

Dans un mode de réalisation, un seul des deux rouleaux de chaque module est entraîné à vitesse régulée.

Ainsi, par exemple, dans le mode de réalisation représenté en figure 5, les rouleaux 13a, 13"a sont des rouleaux de renvoi, les rouleaux 14'a, 14a étant des rouleaux motorisés.

Ainsi qu'il apparait nettement en figure 6, les courroies d'un module donné sont décalées transversalement des courroies des voies correspondantes, dans le module amont ou le module aval au module considéré.

Le décalage correspond à celui existant éventuellement entre le plan de symétrie L des supports 4 et l'axe d'inertie des produits convoyés 5.

Dans l'intervalle défini par les axes des rouleaux 13a et 14'a de la figure 6, l'on trouve pour chaque voie de convoyage la, 1b, 1c, 1d ou le, d'un bord transversal à l'autre de la voie de convoyage :
- une première courroie 2 du premier module I, amont ;
- une première courroie 2 du deuxième module II, aval ;
- une seconde courroie 2' du premier module I ;
- une seconde courroie 2' du deuxième module II.

Grâce à cette structure, toutes les zones du convoyeur sont potentiellement actives et il n'y a pas de zone de convoyage, passive ou "morte" entre les modules.

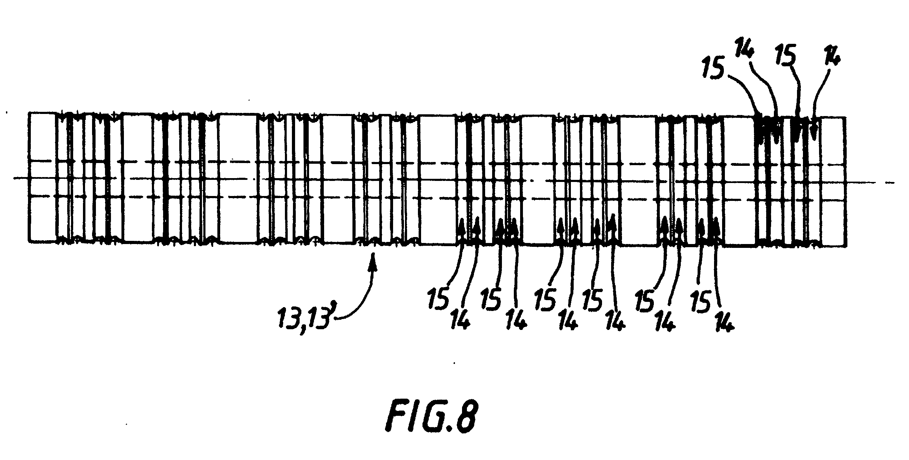

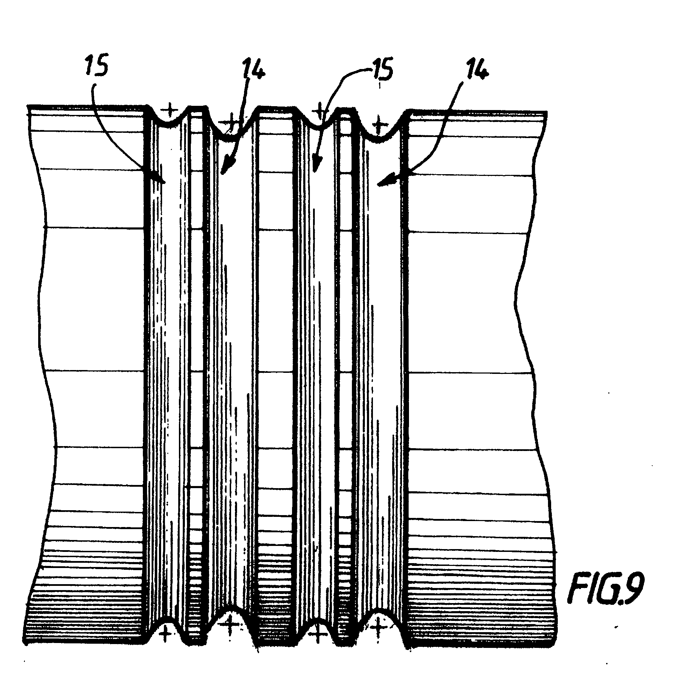

Les figures 8 et 9 illustrent la géométrie des rouleaux. Chaque rouleau comporte au moins deux paires de gorges 14, 15 par voie de guidage la, 1b, 1c, 1d, le des modules associés.

La profondeur des gorges 14 correspondant au module amont est supérieure à la profondeur des gorges 15 correspondant au module aval.

De sorte qu'au passage à l'aplomb des rouleaux, les produits 5 ne sont plus entraînés par les courroies 2, 2' du module amont, correspondant à une voie de convoyage donnée, mais par les courroies 2, 2' du module aval correspondant à ladite voie de convoyage.

Dans un mode de réalisation, le convoyeur comporte au moins quatre modules de convoyage, disposés latéralement deux à deux, une paire de modules étant placée en amont de l'autre paire.

Le système de convoyage peut comporter des moyens de détection de la saturation d'une zone tampon d'accumulation de produits 5.

Dans un mode de réalisation, ces moyens de détection sont de type optique à réflexion, à faisceau laser visible ou infrarouge par exemple, le faisceau étant incliné par rapport à la direction de convoyage des produits.

Les moyens de détection peuvent être associés à des moyens de commande de la rotation d'au moins un rouleau 13, 13' des courroies d'un convoyeur.

Les moyens de détection peuvent comprendre, selon différents modes de réalisation :
- des capteurs de tension des courroies des convoyeurs ; et/ou
- des capteurs de présence de produits 5, ces capteurs étant disposés au moins en aval de chaque module de convoyage. et/ou
- des capteurs de pression des courroies 2 sur les zones d'appui 8.

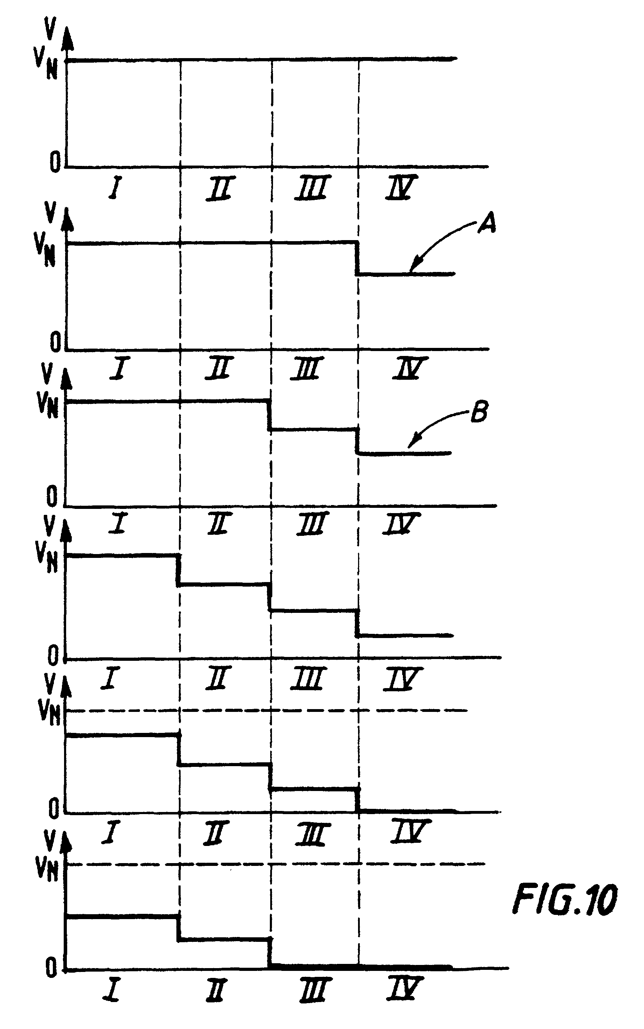

La commande de vitesse d'entraînement des rouleaux moteurs de chaque module d'un convoyeur va maintenant être discuté, en référence à la figure 10.

En fonctionnement normal, tous les rouleaux moteurs sont entraînés à la vitesse nominale V_{N}.

Dans un mode de réalisation, cette vitesse nominale est la vitesse maximum d'entraînement des rouleaux.

Lorsqu'une baisse de débit de sortie intervient, des détecteurs, associés au module extrême aval (le 4ème module dans le mode de réalisation considéré en figure 10) détectent la présence d'une plus grande quantité de produits sur ce module.

En conséquence, la vitesse d'entraînement des courroies de ce module est abaissée, celles des autres rouleaux des modules placés en amont n'étant pas modifiées (courbe A).

Dans le cas où le débit de sortie reste faible voire diminue encore ou s'annule, l'accumulation de produits va progresser du module extrême aval vers les modules amont.

Dès que les détecteurs associés au module placé immédiatement avant le module extrême aval détectent la présence d'une plus grande quantité de produits, la vitesse de ce module (le module n° III dans le cas de la figure 10) est abaissée (courbe B).

Le cas échéant, la vitesse d'entraînement des rouleaux du module extrême aval est encore abaissée.

En cas d'accumulation croissante de produits vers l'amont, la vitesse des modules est ainsi modifiée de proche en proche de l'aval vers l'amont, jusqu'à l'arrêt éventuel de l'ensemble des modules (cf figure 10).

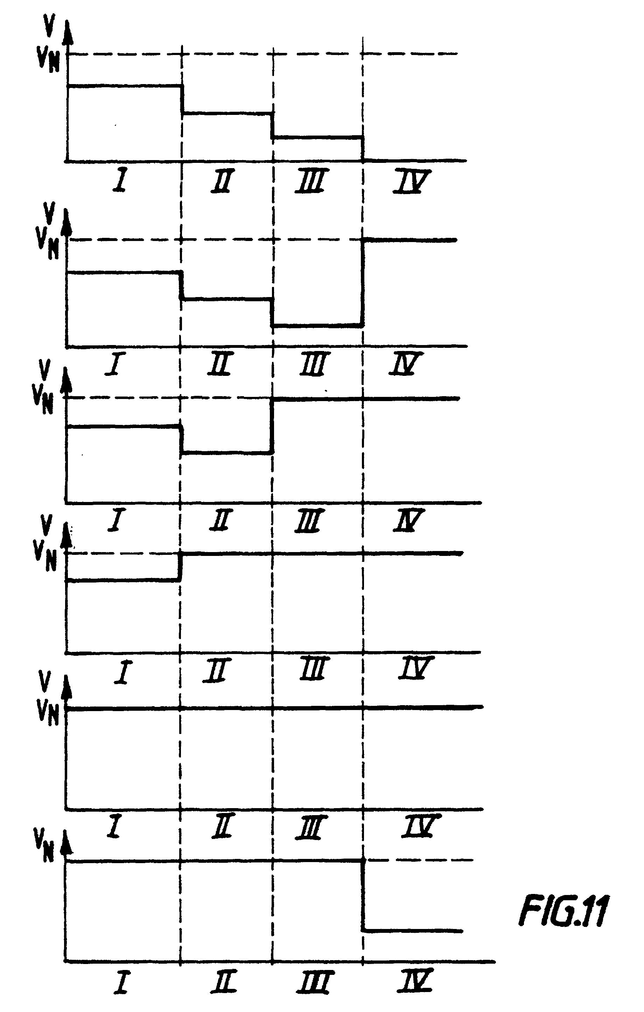

Dès lors que le débit de sortie redevient normal, la vitesse des modules est à l'inverse augmentée jusqu'à sa valeur nominale, du module aval vers le module amont (cf figure 11).

L'invention se rapporte, selon un troisième aspect, à l'application d'un système de convoyage tel que présenté ci-dessus au convoyage de pots individualisés ou groupés par deux, quatre, six, huit pots, de nappes, ou de bandes de pots tels que des pots thermoformés de produits laitiers.

Dans une application particulière, le système de convoyage est placé au sein d'une ligne de production composée de machines ou de postes de travail, le système de convoyage reliant deux machines successives pour transporter des produits 5 de la première machine à la deuxième machine en permettant une accumulation des pièces 5 pour constituer un stock tampon palliant les différences temporaires du début de production desdites deux machines.

## Revendications

1. Dispositif de convoyage à courroie comprenant deux organes de renvoi (13, 13') d'au moins une courroie sans fin (2), l'un au moins des deux organes de renvoi (13, 13') étant entraîné en rotation de sorte à provoquer le déplacement de la dite courroie (2) qui est montée en tension entre les organes de renvoi (13, 13'), ce dispositif comprenant un support (4) pourvu d'une gorge (3), **caractérisé en ce que** ledit support(4) comprend au moins une zone d'appui (8) de la surface inférieure (9) de la courroie (2), cette zone d'appui (8) étant distante d'une hauteur (h₉) du fond de la gorge (3), la courroie (2) pouvant s'escamoter dans la gorge (3) sous l'effet d'une charge importante de convoyage.

2. Dispositif selon la revendication 1, **caractérisé en ce qu'**il comporte au moins deux zones d'appui de longueur 1 séparées d'une distance d, la longueur 1 et la distance d étant mesurées suivant la direction de convoyage (D1).

3. Dispositif selon la revendication 1 ou 2, **caractérisé en ce que** la courroie (2) est élaborée en un matériau choisi parmi le groupe comprenant les polymères tels que PVC, PP, PTFE, PA, élastomères, les polymères renforcés de fibres naturelles, minérales ou synthétiques, les élastomères chargés de fibres métalliques.

4. Dispositif selon l'une quelconque des revendications 1 à 3, **caractérisé en ce que** la courroie (2) est de section transversale ronde, son axe d'élancement (10) étant en outre disposé au droit des zones d'appui (8) à une distance (h10) en dessous de la surface supérieure (11) du support (4), son diamètre (12) étant inférieur à l'ouverture latérale de la gorge (3).

5. Dispositif selon l'une quelconque des revendications 1 à 4, **caractérisé en ce que** le support (4) est élaboré en un matériau choisi parmi le groupe comprenant les polymères tels que PVC, PP, PTFE, PA ; les élastomères, les alliages métalliques.

6. Dispositif selon la revendication 5, **caractérisé en ce que** le support (4) est réalisé en polyamide haute densité ou tout autre polymère équivalent résistant à l'usure par frottement, facilement usinable et présentant une absorption d'humidité faible et de faibles coefficients de dilatation en atmosphère humide.

7. Dispositif selon l'une quelconque des revendications 1 à 6, **caractérisé en ce que** le support (4) comporte deux gorges (3, 3'), dans chacune desquelles se déplace une courroie (2, 2') .

8. Dispositif selon la revendication 7, **caractérisé en ce que** les deux gorges (3, 3') sont de formes sensiblement identiques, les courroies (2, 2') étant de géométries sensiblement identiques.

9. Dispositif selon la revendication 7, **caractérisé en ce que** les deux gorges (3, 3') sont de formes différentes, en section transversale, les courroies (2, 2') étant de formes différentes en section transversale.

10. Dispositif selon l'une quelconque des revendications 7 à 9, **caractérisé en ce que** les deux gorges sont disposées symétriquement par rapport à un plan (L) longitudinal de symétrie du support (4).

11. Dispositif selon la revendication 10, **caractérisé en ce que** l'axe d'inertie principal de chaque produit (5) convoyé est écarté d'une distance (e) par rapport au plan (L) de symétrie du support (4).

12. Dispositif selon l'une quelconque des revendications 1 à 6, **caractérisé en ce que** le support (4) comporte plus de deux gorges (3, 3') dans chacune desquelles se déplace une courroie (2, 2').

13. Convoyeur modulaire d'accumulation comprenant au moins deux dispositifs selon l'une quelconque des revendications 1 à 12.

14. Convoyeur modulaire d'accumulation selon la revendication 13, **caractérisé en ce qu'**il comporte au moins deux dispositifs de convoyage disposés latéralement, sensiblement parallèlement.

15. Convoyeur modulaire d'accumulation selon la revendication 13, **caractérisé en ce qu'**il comporte au moins deux dispositifs de convoyage disposés l'un en amont de l'autre.

16. Convoyeur modulaire d'accumulation selon la revendication 14 ou 15, **caractérisé en ce qu'**il comporte au moins quatre dispositifs de convoyage, disposés latéralement deux à deux, une paire de dispositifs étant placée en amont de l'autre paire.

17. Convoyeur modulaire d'accumulation selon l'une quelconque des revendications 13 à 16, **caractérisé en ce qu'**il comporte des barres de guidages limitant latéralement les voies de convoyage.

18. Convoyeur modulaire d'accumulation selon l'une quelconque des revendications 13 à 17, **caractérisé en ce que** chaque dispositif de convoyage formant un module du convoyeur comporte deux rouleaux (13, 13') dont l'un au moins est relié à un dispositif moteur pourvu d'un variateur de vitesse.

19. Convoyeur modulaire d'accumulation selon la revendication 18, **caractérisé en ce que** les courroies d'un module donné sont décalées transversalement des courroies des voies de convoyage correspondantes, dans le module amont ou le module aval du module considéré.

20. Convoyeur modulaire d'accumulation selon la revendication 19, **caractérisé en ce que** le décalage transversal entre les courroies des modules adjacents, pour chaque voie de convoyage, est sensiblement identique à la distance séparant le plan de symétrie L des supports (4) et l'axe d'inertie des produits convoyés (5).

21. Convoyeur modulaire d'accumulation selon l'une quelconque des revendications 18 à 20, **caractérisé en ce que** chaque rouleau des modules de convoyage comporte au moins deux paires de gorges (14, 15) par voie de guidage (1a, 1b, 1c, 1d, le) bicable, la profondeur des gorges correspondant au module amont étant supérieure à la profondeur des gorges du module aval associé.

22. Convoyeur modulaire d'accumulation selon l'une quelconque des revendications 13 à 21, **caractérisé en ce qu'**il comporte des moyens de détection de la saturation d'une zone tampon d'accumulation de produits (5).

23. Convoyeur modulaire d'accumulation selon la revendication 22, **caractérisé en ce que** les moyens de détection sont associés à des moyens de commande de la rotation d'au moins un organe de renvoi (13, 13') des courroies d'un convoyeur.

24. Convoyeur modulaire d'accumulation selon la revendication 22 ou 23, **caractérisé en ce que** les moyens de détection comprennent des capteurs de tension des courroies des convoyeurs.

25. Convoyeur modulaire d'accumulation selon l'une quelconque des revendications 22 à 24, **caractérisé en ce que** les moyens de détection comprennent des capteurs de présence de produits (5), ces capteurs étant disposés au moins en aval de chaque module de convoyage.

26. Convoyeur modulaire d'accumulation selon l'une quelconque des revendications 22 à 25, **caractérisé en ce que** les moyens de détection comprennent des capteurs de pression des courroies (2) sur les zones d'appui (8).

27. Application d'un convoyeur modulaire tel que présenté dans l'une quelconque des revendications 20 à 26, au convoyage de pots individualisés.

28. Application d'un convoyeur modulaire tel que présenté dans l'une quelconque des revendications 20 à 26, au convoyage d'une nappe de pots, de groupes de deux, quatre, six ou huit pots en sens long ou sens travers.

29. Application d'un convoyeur modulaire tel que présenté dans l'une quelconque des revendications 20 à 26, au sein d'une ligne de production composée de machines ou de postes de travail, le système de convoyage reliant deux machines successives pour transporter des produits (5) de la première machine à la deuxième machine en permettant une accumulation des pièces (5) pour constituer un stock tampon palliant les différences temporaires du début de production desdites deux machines.

## Patentansprüche

1. Beförderungsvorrichtung mit Förderband mit zwei Rückführorganen (13, 13') an wenigstens einem Endlosband (2), wobei wenigstens eines der beiden Rückführorgane (13, 13') derart in Rotation angetrieben wird, dass die Verschiebung des besagten, in Spannung zwischen den Rückführorganen (13, 13') angebrachten Förderbandes (2) hervorgerufen wird, wobei diese Vorrichtung einen mit einer Auskehlung (3) versehenen Träger (4) umfasst, **dadurch gekennzeichnet, dass** der besagte Träger (4) wenigstens einen Stützbereich (8) der unteren Fläche (9) des Förderbandes (2) umfasst, wobei dieser Stützbereich (8) in einer Höhe (h₉) entfernt vom Boden der Auskehlung (3) ist, wobei das Förderband (2) sich unter der Wirkung einer großen Beförderungslast in der Auskehlung (3) versenken kann.

2. Vorrichtung gemäß Anspruch 1, **dadurch gekennzeichnet, dass** sie wenigstens zwei um eine Entfernung d getrennte Längenstützbereiche 1 beinhaltet, wobei die Länge I und die Entfernung d gemäß der Beförderungsrichtung (D1) gemessen werden.

3. Vorrichtung gemäß Anspruch 1 oder 2, **dadurch gekennzeichnet, dass** das Förderband (2) aus einem aus der Polymere, wie PVC, PP, PTFE, PA, Elastomer, durch Naturfasern, mineralische oder synthetische Fasern verstärkte Polymere, mit Metallfasern vermischten Elastomeren umfassenden Gruppe ausgewählten Material hergestellt ist.

4. Vorrichtung gemäß Anspruch 1 bis 3, **dadurch gekennzeichnet, dass** das Förderband (2) einen runden Querschnitt hat, wobei seine Ausdehnungsachse (10) darüber hinaus gegenüber den Stützbereichen (8) in einer Entfernung (h10) unterhalb der oberen Fläche (11) des Trägers (4) angeordnet ist, wobei sein Durchmesser (12) kleiner ist als die laterale Öffnung der Auskehlung (3).

5. Vorrichtung gemäß Anspruch 1 bis 4, **dadurch gekennzeichnet, dass** der Träger (4) aus der Polymere, wie PVC, PP, PTFE, PA, Elastomeren, Metalllegierungen umfassenden Gruppe ausgewählten Material hergestellt ist.

6. Vorrichtung gemäß Anspruch 5, **dadurch gekennzeichnet, dass** der Träger (4) aus hochdichtem Polymer oder jedem anderen äquivalenten, gegen Abrieb widerstandsfähigem, leicht zu bearbeitendem und eine geringe Feuchtigkeitsaufnahme sowie geringe Ausdehnungskoeffizienten in feuchter Atmosphäre aufweisendem Polymer hergestellt ist.

7. Vorrichtung gemäß Anspruch 1 bis 6, **dadurch gekennzeichnet, dass** der Träger (4) zwei Auskehlungen (3, 3') umfasst, wobei sich in jeder von ihnen ein Förderband (2, 2') verschiebt.

8. Vorrichtung gemäß Anspruch 7, **dadurch gekennzeichnet, dass** die beiden Auskehlungen (3, 3') deutlich identische Formen aufweisen, wobei die Förderbänder (2, 2') geometrisch deutlich identisch sind.

9. Vorrichtung gemäß Anspruch 7, **dadurch gekennzeichnet, dass** die beiden Auskehlungen (3, 3') im Querschnitt deutlich unterschiedliche Formen aufweisen, wobei die Förderbänder (2, 2') im Querschnitt unterschiedliche Formen haben.

10. Vorrichtung gemäß Anspruch 7 bis 9, **dadurch gekennzeichnet, dass** die beiden Auskehlungen im Verhältnis zu einer Symmetrieebene (L) in Längsrichtung des Trägers (4) symmetrisch angeordnet sind.

11. Vorrichtung gemäß Anspruch 10, **dadurch gekennzeichnet, dass** die Hauptträgheitsachse jedes geförderten Produkts (5) im Verhältnis zur Symmetrieebene (L) des Trägers (4) um eine Entfernung (e) beabstandet ist.

12. Vorrichtung gemäß Anspruch 1 bis 6, **dadurch gekennzeichnet, dass** der Träger mehr als zwei Auskehlungen (3, 3') umfasst, wobei sich in jeder von ihnen ein Förderband (2, 2') verschiebt.

13. Modularer Akkumulationsbeförderer mit wenigstens zwei Vorrichtungen gemäß Anspruch 1 bis 12.

14. Modularer Akkumulationsbeförderer gemäß Anspruch 13, **dadurch gekennzeichnet, dass** er wenigstens zwei lateral, deutlich parallel angeordnete Beförderungsvorrichtungen umfasst.

15. Modularer Akkumulationsförderer gemäß Anspruch 13, **dadurch gekennzeichnet, dass** er wenigstens zwei Förderbänder umfasst, eines oberhalb und eines unterhalb angeordnet.

16. Modularer Akkumulationsförderer gemäß Anspruch 14 oder 15, **dadurch gekennzeichnet, dass** er wenigstens vier, lateral paarig angeordnete Beförderungsvorrichtungen umfasst, wobei ein Vorrichtungspaar oberhalb des anderen Paares platziert ist.

17. Modularer Akkumulationsförderer gemäß Anspruch 13 bis 16, **dadurch gekennzeichnet, dass** er die Beförderungswege lateral begrenzende Führungsstangen umfasst.

18. Modularer Akkumulationsförderer gemäß Anspruch 13 bis 17, **dadurch gekennzeichnet, dass** jede ein Modul des Beförderers bildende Beförderungsvorrichtung zwei Rollen (13, 13') umfasst, von denen wenigstens eine an eine mit einem Regelantrieb versehene Motorvorrichtung angeschlossen ist.

19. Modularer Akkumulationsförderer gemäß Anspruch 18, **dadurch gekennzeichnet, dass** die Förderbänder eines bestimmten Moduls im Modul oberhalb oder im Modul unterhalb des betrachteten Moduls transversal von den Förderbändern der entsprechenden Beförderungswege verschoben sind.

20. Modularer Akkumulationsförderer gemäß Anspruch 19, **dadurch gekennzeichnet, dass** die transversale Verschiebung zwischen den Förderbändern der anliegenden Module bei jedem Beförderungsweg deutlich identisch mit der die Symmetrieebene L der Träger (4) und der Trägheitsachse der beförderten Produkte (5) trennenden Entfernung ist.

21. Modularer Akkumulationsförderer gemäß Anspruch 18 bis 20, **dadurch gekennzeichnet, dass** jede Rolle der Beförderungsmodule wenigstens zwei Paar Auskehlungen (14, 15) durch zweikabligen Führungsweg (1a, 1b, 1c, 1d, 1e) umfasst, wobei die dem Modul oberhalb entsprechende Tiefe der Auskehlungen größer ist als die Tiefe des unterhalb zugeordneten Moduls.

22. Modularer Akkumulationsförderer gemäß Anspruch 13 bis 21, **dadurch gekennzeichnet, dass** er Erkennungsmittel für die Sättigung einer Akkumulations-Pufferzone von Produkten (5) umfasst.

23. Modularer Akkumulationsförderer gemäß Anspruch 22, **dadurch gekennzeichnet, dass** die Erkennungsmittel Steuermitteln der Rotation wenigstens eines Rückführorgans (13, 13') der Förderbänder eines Förderers zugeordnet sind.

24. Modularer Akkumulationsförderer gemäß Anspruch 22 oder 23, **dadurch gekennzeichnet, dass** die Erkennungsmittel Spannungssensoren der Förderbänder der Förderer beinhalten.

25. Modularer Akkumulationsförderer gemäß Anspruch 22 bis 24, **dadurch gekennzeichnet, dass** die Erkennungsmittel Sensoren für das Vorhandensein von Produkten (5) beinhalten, wobei diese Sensoren wenigstens unterhalb jedes Fördermoduls angeordnet sind.

26. Modularer Akkumulationsförderer gemäß Anspruch 22 bis 25, **dadurch gekennzeichnet, dass** die Erkennungsmittel auf den Stützbereichen (8) Drucksensoren der Förderbänder (2) umfassen.

27. Anwendung eines modularen Förderers gemäß Vorstellung in Anspruch 20 bis 26, mit Förderung von einzelnen Töpfen.

28. Anwendung eines modularen Förderers gemäß Vorstellung in Anspruch 20 bis 26, mit Förderung einer Topfdecke in Gruppen von zwei, vier, sechs oder acht Töpfen in Längsrichtung oder in Querrichtung.

29. Anwendung eines modularen Förderers, gemäß Vorstellung in Anspruch 20 bis 26, innerhalb einer aus Maschinen oder Arbeitsplätzen bestehenden Produktionslinie, wobei das Beförderungssystem zwei aufeinander folgende Maschinen zum Transport von Produkten (5) von der ersten Maschine zur zweiten Maschine verbindet und dabei eine Akkumulation von Teilen (5) zur Erstellung eines die temporären Unterschiede des Produktionsbeginns der besagten beiden Maschinen ausgleichenden Pufferlagers erlaubt.

## Claims

1. A conveying device comprising two return devices (13, 13')at least one endless belt (2), at least one of the two return devices (13, 13') being rotated so that it causes the said belt (2) to move the said belt, which is installed under tension between the return devices (13, 13'), this device comprising a support (4) fitted with a groove (3) **characterised in that** the said support comprises at least one support zone (8) on the lower surface (9) of the belt (2), this support zone (8) being at a height (h9) above the groove (3), the belt (2) being able to retract into the groove (3) under the effect of a heavy load on the conveyor.

2. A device according to claim 1, **characterised in that** it comprises at least two supports zones of I in length, separated by a distance d, the length I and the distance d being measured according to the direction of flow (D1).

3. A device according to claim 1 or 2, **characterised in that** the belt (2) is made of any material selected from the group of polymers, such as PVC, PP, PTFE, PA, elastomers, polymers reinforced with natural, mineral or synthetic fibres, elastomers filled with metallic fibres.

4. A device according to any one of the claims 1 to 3, **characterised in that** the cross-section of the belt (2) is round, its axis of movement (10) being, in addition, opposite the support zones (8) at a distance (h10) below the top surface (11) of the support (4); its diameter (12) being less than the side opening of the groove (3).

5. A device according to any one of the claims 1 to 4, **characterised in that** the support (4) is made of any material selected from the group of polymers, such as PVC, PP, PTFE, PA, elastomers, and metal alloys.

6. A device according to claim 5, **characterised in that** the support (4) is made of high density polyamide or any other equivalent polymer resistant to wear through friction, which is easy to machine and which does not absorb humidity easily and which has a low coefficient of expansion in humid atmospheres.

7. A device according to any one of the claims 1 to 6, **characterised in that** the support (4) has two grooves (3, 3') in each of which a belt (2, 2') moves.

8. A device according to claim 7, **characterised in that** the two grooves (3, 3') are of identical shape, the belts (2, 2') substantially having the same geometry.

9. A device according to claim 7, **characterised in that** the two grooves (3, 3') are of different shape, in terms of cross-section, the belts (2, 2') being of different cross-sectional shapes.

10. A device according to any one of the claims 7 to 9, **characterised in that** the two grooves are arranged symmetrically in relation to a longitudinal plane of symmetry (L) of the support (4).

11. A device according to claim 10, **characterised in that** the main axis of inertia of each product (5) transported is separated from the plane of symmetry (L) of the support (4) by a distance (e).

12. A device according to any one of the claims 1 to 6, **characterised in that** the support (4) has more than two grooves (3, 3') in each of which moves a belt (2, 2').

13. A modular accumulation conveyor comprising at least two devices according to any one of the claims 1 to 12.

14. A modular accumulation conveyor according to claim 13, **characterised in that** it comprises at least two conveyors arranged laterally, in parallel to each other.

15. A modular accumulation conveyor according to claim 13, **characterised in that** it comprises at least two conveying devices one upstream of the other.

16. A modular accumulation conveyor according to claim 14 or 15, **characterised in that** is comprises at least four conveying devices arranged in pairs side by side, one pair of devices being placed upstream of the other pair.

17. A modular accumulation conveyor according to any one of the claims 13 to 16, **characterised in that** it comprises guide bars that delimit the conveyor track laterally.

18. A modular accumulation conveyor according to any one of the claims 13 to 17, **characterised in that** each conveying device forming a module of the conveyor comprises two rollers (13, 13') at least one of which is linked to a drive device with a variable speed drive.

19. A modular accumulation conveyor according to claim 18, **characterised in that** the belts (2) of a given module are shifted sideways of the belts (2) of the corresponding conveyor tracks in the upstream module or downstream module of the module concerned.

20. A modular accumulation conveyor according to claim 19, **characterised in that** the sideways shift between the belts (2) of adjacent modules, for each conveyor track, is identical to the distance separating the plane of symmetry L of the supports (4) and the axis of inertia of the products being transported (5).

21. A modular accumulation conveyor according to any one of the claims 18 to 20, **characterised in that** each roller of the conveyor modules has at least two pairs of grooves (14, 15) per twin cable guide track (1a, 1b, 1c, 1d, 1e), the depth of the grooves of the upstream module being greater than the depth of the grooves of the associated downstream module.

22. A modular accumulation conveyor according to any one of the claims 13 to 21, **characterised in that** it comprises means to detect the saturation of a buffer zone for the accumulation of the products (5).

23. A modular accumulation conveyor according to claim 22, **characterised in that** the means of detection are associated with means to control the rotation of at least one of the return devices (13, 13') of the belts (2) of a conveyor.

24. A modular accumulation conveyor according to claim 22 or 23, **characterised in that** the means of detection comprise tension sensors for the belts (2) of the conveyors.

25. A modular accumulation conveyor according to any one of the claims 22 to 24, **characterised in that** the means of detection comprise sensors that detect the presence of the products (5), these sensors being arranged at least downstream of each conveyor module.

26. A modular accumulation conveyor according to any one of the claims 22 or 25, **characterised in that** the means of detection comprise sensors to detect the pressure of the belts (2) on the support zones (8).

27. Application of a modular conveyor as described in any one of the claims 20 to 26, for the transport of individual pots.

28. Application of a modular conveyor as described in any one of the claims 20 to 26, for the transport of a layer of pots, groups of two, four, six or eight pots, both lengthways and sideways.

29. Application of a modular conveyor as described in any one of the claims 20 to 26, within a production line made up of machines or work stations, the conveying system linking two successive machines to transport products (5) from the first machine to the second machine by providing for the accumulation of parts (5) to form a buffer stock to make up for any temporary differences at the start of production of the two said machines.
